(19) Europäisches Patentamt
European Patent Office
Office européen des brevets

(11) Publication number : **0 419 656 B1**

(12) **EUROPEAN PATENT SPECIFICATION**

(45) Date of publication of patent specification : **22.03.95 Bulletin 95/12**

(51) Int. Cl.[6] : **H02P 7/628,** G05B 11/28, H02M 5/458

(21) Application number : **89901746.1**

(22) Date of filing : **27.01.89**

(86) International application number : **PCT/JP89/00083**

(87) International publication number : **WO 89/07364 10.08.89 Gazette 89/18**

(54) **SPEED CONTROLLER.**

(30) Priority : **29.01.88 JP 17441/88**

(43) Date of publication of application : **03.04.91 Bulletin 91/14**

(45) Publication of the grant of the patent : **22.03.95 Bulletin 95/12**

(84) Designated Contracting States : **DE FR GB**

(56) References cited :
**WO-A-89/07364**
**DE-A- 3 527 844**
**JP-A- 6 082 078**
**JP-A-62 203 567**
**CONF. RECORD 1987 IEEE, 23 October 1987, US; P. ENJETI ET AL.: 'A NEW CURRENT CONTROL SCHEME FOR AC MOTOR DRIVES'**
**PATENT ABSTRACTS OF JAPAN, vol. 10, no. 42 (E-382)(2099) 19 February 1986; & JP-A-60 197 189**

(73) Proprietor : **FANUC LTD.**
**3580, Shibokusa Aza-Komanba, Oshino-mura**
**Minamitsuru-gun, Yamanashi 401-05 (JP)**

(72) Inventor : **KONO, Shinichi, FANUC Mansion Harimoni 7-203**
**3539-1, Shibokusa, Oshino-mura**
**Minamitsuru-gun,Yamanashi 401-05 (JP)**
Inventor : **TAKAHASHI, Hironobu, FANUC Dai-3 Villa-Karamatsu**
**3527-1, Shibokusa, Oshino-mura**
**Minamitsuru-gun,Yamanashi 401-05 (JP)**

(74) Representative : **Billington, Lawrence Emlyn et al**
**HASELTINE LAKE & CO**
**Hazlitt House**
**28 Southampton Buildings**
**Chancery Lane**
**London WC2A 1AT (GB)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Jouve, 18, rue Saint-Denis, 75001 PARIS

## Description

This invention relates to a velocity control apparatus and method, and to a PWM control device, for controlling the velocity of a servomotor by PWM (pulse-width modulation) control of an inverter.

In recent years, microprocessors have come to be widely used in velocity control apparatus for controlling motor drive. With a motor drive circuit composed of digital circuitry using a microprocessor, table information such as amplitude characteristics decided in conformity with motor characteristics is created, and the velocity of a servomotor is controlled by PWM control of an inverter based on a set velocity signal.

In a conventional velocity control apparatus of this kind, the range of fluctuation allowed with regard to power supply voltage is set to be within a prescribed limit. The apparatus is provided with a function which protects the motor from overcurrents when the aforementioned limit is exceeded, and with a protective function which shuts down the system automatically when the voltage is too low. However, no particular consideration is given to fluctuations within the prescribed limit.

More specifically, a fixed current loop constant K is provided. Therefore, when power supply voltage Vdc becomes high, current loop gain K′ (= K·Vdc/Fa, where Pa represents carrier wave amplitude) rises in proportion to the voltage value and there is the danger that the motor current will oscillate. Conversely, when the power supply voltage becomes low, current loop gain diminishes and the response of the velocity loop to a commanded velocity signal slows down. The result is a deterioration in the quick response of the control system.

The present invention has been devised to solve the foregoing problems and its object is to provide a velocity control apparatus and method, and a PWM control device, which make stable velocity control possible by compensating for fluctuation in power supply voltage and obtaining a constant current loop gain.

According to a first aspect of the present invention there is provided a velocity control apparatus, with a current control loop, for controlling drive current of a servomotor by a PWM-controlled inverter circuit, thereby to control the velocity of the servomotor, comprising a DC power supply for said inverter circuit and being characterised by:

voltage detecting means for detecting an output voltage value of the DC power supply; and

gain control means for holding constant the current loop gain in dependence upon the detected output voltage value of the DC power supply.

According to a second aspect of the present invention there is provided a PWM control device for PWM-controlling an inverter circuit in a velocity control apparatus, with a current control loop, for controlling drive current of a servomotor thereby to control the velocity of the servomotor, the PWM control device being characterised by:

constant computing means for computing a current loop constant to be inversely proportional to DC power supply voltage applied to the inverter circuit when it is in use; and

signal generating means for forming a PWM control signal in dependence upon said current loop constant and a command current value in such a manner that the current loop gain becomes constant.

According to a third aspect of the present invention there is provided a velocity control method in a velocity control apparatus connected to a servomotor as a controlled system, the velocity control apparatus having a current control loop and comprising an inverter circuit controlling drive current of the servomotor thereby to control the velocity of the servomotor, the velocity control apparatus further comprising command means forming a current command and a velocity command for the servomotor, and arithmetic means computing a PWM command voltage in dependence upon a differential signal between the current command from the command means and a current feedback signal from the servomotor, the velocity control method being characterised by:

computing, by a PWM control device comprising constant computing means, a current loop constant inversely proportional to DC power supply voltage applied to the inverter circuit;

forming, by signal generating means, a PWM control signal in dependence upon said current loop constant and a current command value in such a manner that the current loop gain is constant;

executing computation of the current loop constant in the PWM control device within one sampling period of a current value fed back from the servomotor;

computing the PWM command voltage; and

deciding and outputting motor current.

Thus, in accordance with the present invention, when the servomotor is PWM-controlled, the power supply voltage is detected at all times and the current loop gain is held constant to enhance the stability of the control system. Further, in accordance the PWM control device of the invention, it is possible to construct a control system stabilized with respect to fluctuations in power supply voltage.

### Brief Description of the Drawings

Fig. 1 is a block diagram illustrating an embodiment of the present invention, Fig. 2 is a view illustrating an example of the construction of a motor control system, Fig. 3 is a time chart for describing PWM control, Fig. 4 is a view for describing computation with regard to current loop gain K′, and Fig. 5 is a flowchart illustrating a processing procedure for setting gain.

An embodiment of the present invention will now be described in detail with reference to the drawings.

Fig. 2 is a view illustrating an example of the construction of a PWM-controlled motor control system. An inverter section 2 supplied with commercial AC voltage is connected to a converter section I as a DC power supply having a predetermined voltage value. The inverter section 2 is a transistorized inverter comprising a plurality of switching transistors and is for driving a three-phase AC motor 3. The inverter section 2 is connected to a PWM control circuit 4 and controls a current supplied to the primary side of the motor 3 in response to a PWM control signal applied to the base of each transistor from the PWM control circuit 4. The motor can thus be controlled to vary its velocity.

Fig. 3 is a time chart for describing PWM control of the transistors in the inverter section 2 by means of the PWM control circuit 4. A triangular wave having a period of 2T is supplied as a carrier wave, and on time $T_{on}$ of the transistors in the inverter section 2 is decided by comparing the triangular wave with the level of a PWM command voltage E. Note that ±Pa represents the amplitude of the carrier wave.

Here the command voltage E is inputted as K(Ic-If) with respect to a current loop constant K, and on time of the transistors, namely the value of drive current applied to the motor 3, is decided in dependence upon the magnitude of the command voltage E. The aforementioned Ic is a command current value decided by a torque command value, and If is a current feedback signal from the motor 3.

Fig. 1 is a block diagram illustrating the current loop of the motor current controlled by the command current value $I_c$.

The command current Ic is compared with the current feedback signal If from the motor 3 by an adder I which computes a current error. The value of the error current is outputted by a current feedback loop which includes an amplifier 11 having a current loop gain K′ capable of variably setting the current loop gain constant K, and a motor section 12 having an electrical constant K″. The current loop constant K is set in such a manner that the current loop gain K′ will be constant irrespective of a fluctuation in power supply voltage.

The current loop gain K′ in the current loop of Fig. 1 will now be described with reference to Fig. 4.

In Fig. 4, two triangles $\Delta oa_1b_1$, $\Delta oa_2b_2$ are similar since the three angles of one are equal to the three corresponding angles of the other. Therefore the following equation holds:

$$\overline{a_1b_1}/\overline{a_2b_2} = \overline{oa_1}/\overline{oa_2}$$

The following substitutions are made:

$$\overline{a_1b_1} = (T - Ton)/2$$

$$\overline{a_2b_2} = T/4$$

$$\overline{oa_1} = Pa - K(Ic - If)$$

$$\overline{oa_2} = Pa$$

Arranging, we have

$$T_{on}/T = I - \{Pa - K(Ic - If)\}/(2Pa) \quad (1)$$

The applied voltage of the motor is as follows:

$$\{Ton \cdot Vdc + Toff \cdot (-Vdc)\}/T = \{(2Ton/T) - I\}Vdc \quad (2)$$

If the right side of Eq. (1) is inserted into Eq. (2) and the expression is arranged, the applied voltage of the motor will be K·Vdc(Ic - If)/Pa. Accordingly, current loop gain K′ becomes as follows:

$$K' = K \cdot Vdc/Pa \quad (3)$$

Therefore, since Pa is constant, the current loop gain K′ will be rendered constant, irrespective of a fluctuation in the power supply voltage Vdc, by deciding the current loop constant K so as to be inversely proportional to the power supply voltage Vdc.

Fig. 5 is a flowchart illustrating a processing procedure for setting gain in the abovementioned motor current control loop.

The motor current is sampled and detected as a digital value in a prescribed interval (step a). The current error Ic - If is calculated based on the current value If (step b). At the same time, the power supply voltage Vdc supplied to the inverter section 2 also is detected (step c). The current loop constant K is calculated using this detected power supply voltage Vc (step d), and the PWM control signal is calculated from the current error and current loop constant in such a manner that the current loop gain will be rendered constant (step e). The motor current is decided by the PWM control signal thus outputted, and velocity control is carried out (step f).

Though an embodiment of the present invention has been described, the invention it not limited thereto but can be modified in various ways without departing from the scope of the claims.

The velocity control apparatus and the PWM control device of the present invention are capable of rendering current loop gain constant by setting a current loop constant that is inversely proportional to a fluctuation in power supply voltage. This makes possible stabilized velocity control of a servomotor.

## Claims

1. A velocity control apparatus, with a current control loop, for controlling drive current of a servomotor (3) by a PWM-controlled inverter circuit (2), thereby to control the velocity of the servomotor (3), comprising a DC power supply (1) for said inverter circuit (2) and being characterised by:

    voltage detecting means for detecting an output voltage value (Vdc) of the DC power supply (1); and

    gain control means (11) for holding constant the current loop gain (K′) in dependence upon the detected output voltage value (Vdc) of the DC power supply (1).

**2.** A PWM control device for PWM-controlling an inverter circuit (2) in a velocity control apparatus, with a current control loop, for controlling drive current of a servomotor (3) thereby to control the velocity of the servomotor (3), the PWM control device being characterised by:

constant computing means for computing a current loop constant (K) to be inversely proportional to DC power supply voltage (Vdc) applied to the inverter circuit (2) when it is in use; and

signal generating means for forming a PWM control signal in dependence upon said current loop constant (K) and a command current value (Ic) in such a manner that the current loop gain (K′) becomes constant.

**3.** A velocity control apparatus according to claim 1, having an inverter circuit (2) connected to a servomotor (3) as a controlled system, the velocity control apparatus comprising:

command means for forming a current command (Ic) and a velocity command for the servomotor (3); and

arithmetic means for computing a PWM command voltage in dependence upon a differential signal between a current command (Ic) from the command means, and a current feedback signal (If) from the servomotor (3).

**4.** A velocity control method in a velocity control apparatus connected to a servomotor (3) as a controlled system, the velocity control apparatus having a current control loop and comprising an inverter circuit (2) controlling drive current of the servomotor (3) thereby to control the velocity of the servomotor (3), the velocity control apparatus further comprising command means forming a current command (Ic) and a velocity command for the servomotor (3), and arithmetic means computing a PWM command voltage in dependence upon a differential signal between the current command (Ic) from the command means and a current feedback signal (If) from the servomotor (3), the velocity control method being characterised by:

computing, by a PWM control device comprising constant computing means, a current loop constant (K) inversely proportional to DC power supply voltage (Vdc) applied to the inverter circuit (2);

forming, by signal generating means, a PWM control signal in dependence upon said current loop constant (K) and a current command value (Ic) in such a manner that the current loop gain (K′) is constant;

executing computation of the current loop constant (K) in the PWM control device within one sampling period of a current value fed back from the servomotor (3);

computing the PWM command voltage; and

deciding and outputting motor current.

**Patentansprüche**

**1.** Geschwindigkeitsregeleinrichtung mit einer Stromregelschleife zum Regeln des Treiberstroms eines Servomotors (3) durch eine Impulsbreitenmodulations-Wechselrichterschal tung (2), um dadurch die Geschwindigkeit des Servomotors (3) zu regeln, mit einer Gleichstromversorgungseinrichtung (1) für die Wechselrichterschaltung (2), **gekennzeichnet** durch

ein Spannungserfassungsmittel zum Erfassen eines Ausgangsspannungswerts (Vdc) der Gleichstromversorgungseinrichtung (1) und

ein Verstärkungsfaktorregelmittel (11) zum Konstanthalten des Stromregelschleifen-Verstärkungsfaktors (K′) in Abhängigkeit von dem erfaßten Ausgangsspannungswert (Vdc) der Gleichstromversorgungseinrichtung (1).

**2.** Impulsbreitenmodulations-Regeleinrichtung zum Regeln mittels Impulsbreitenmodulation einer Wechselrichterschaltung (2) in einer Geschwindigkeitsregeleinrichtung, mit einer Stromregelschleife zum Regeln des Treiberstroms eines Servomotors (3), um dadurch die Geschwindigkeit des Servomotors (3) zu regeln, wobei die Impulsbreitenmodulations-Regeleinrichtung **gekennzeichnet** ist durch

ein Konstanten-Berechnungsmittel zum Berechnen einer Stromregelschleifen-Konstante (K) derart, daß sie umgekehrt proportional zu der Gleichstromversorgungs-Spannung (Vdc) ist, die an die Wechselrichterschaltung (2) gelegt ist, wenn diese in Betrieb ist, und

ein Signalerzeugungsmittel zum Bilden eines Impulsbreitenmodulations-Regelsignals in Abhängigkeit von der Stromregelschleifen-Konstanten (K) und eines Soll-Stromwerts (Ic) in einer Weise, daß der Stromregelschleifen-Verstärkungsfaktor (K′) konstant wird.

**3.** Geschwindigkeitsregeleinrichtung nach Anspruch 1, mit einer Wechselrichterschaltung (2), die mit einem Servomotor (3) als ein geregeltes System verbunden ist, wobei die Geschwindigkeitsregeleinrichtung umfaßt:

ein Befehlsmittel zum Bilden eines Strombefehls (Ic) und eines Geschwindigkeitsbefehls für den Servomotor (3) und

ein arithmetisches Mittel zum Berechnen einer Impulsbreitenmodulations-Befehlsspannung in Abhängigkeit von einem Differenzsignal für eine Differenz zwischen dem Wert eines Strombefehls (Ic) aus dem Befehlsmittel und dem Wert eines Stromrückkopplungssignals (If) aus dem Servomotor (3).

**4.** Geschwindigkeitsregelverfahren in einer Geschwindigkeitsregeleinrichtung, die mit einem Servomotor (3) als ein geregeltes System verbunden ist, wobei die Geschwindigkeitsregeleinrichtung eine Stromregelschleife hat und eine Wechselrichterschaltung (2) umfaßt, die den Treiberstrom des Servomotors (3) regelt, um dadurch die Geschwindigkeit des Servomotors (3) zu regeln, und wobei die Geschwindigkeitsregeleinrichtung ferner umfaßt:

ein Befehlsmittel, das einen Strombefehl (Ic) und einen Geschwindigkeitsbefehl für den Servomotor (3) bildet, und

ein arithmetisches Mittel, das eine Impulsbreitenmodulations-Befehlsspannung in Abhängigkeit von einem Differenzsignal für die Differenz zwischen dem Wert eines Strombefehls (Ic) aus dem Befehlsmittel und dem Wert eines Stromrückkopplungssignals (If) aus dem Servomotor (3) berechnet,

welches Geschwindigkeitsregelverfahren **gekennzeichnet** ist durch Schritte zum

Berechnen mittels einer Impulsbreitenmodulations-Regeleinrichtung, die ein Konstanten-Berechnungsmittel umfaßt, einer Stromregelschleifen-Konstanten (K), die umgekehrt proportional zu der Gleichstromversorgungs-Spannung (Vdc) ist, welche an die Wechselrichterschaltung (2) gelegt ist,

Bilden mittels eines Signalerzeugungsmittels eines Impulsbreitenmodulations-Regelsignals in Abhängigkeit von der Stromregelschleifen-Konstanten (K) und eines Strombefehlswerts (Ic) in einer Weise, daß der Stromregelschleifen-Verstärkungsfaktor (K′) konstant ist,

Ausführen einer Berechnung der StromregelschleifenKonstanten (K) in der Impulsbreitenmodulations-Regeleinrichtung innerhalb einer Abtastperiode eines Stromwertrückkopplungssignals aus dem Servomotor (3),

Berechnen der Impulsbreitenmodulations-Befehlsspannung und

Bestimmen und Ausgeben eines Motorstroms.

## Revendications

**1.** Un régulateur de vitesse à boucle de commande de courant, pour commander le courant d'entraînement d'un servomoteur (3) par l'intermédiaire d'un circuit inverseur (2) commandé par modulation en largeur d'impulsion, de manière ainsi à commander la vitesse du servomoteur (3), comprenant une alimentation en courant continu (1) pour ledit circuit inverseur (2) et étant caractérisé par :

des moyens de détection de tension pour détecter une valeur de tension de sortie (Vdc) de l'alimentation en courant continu (1) ; et

des moyens de commande de gain (11) pour maintenir constant le gain de la boucle de courant (K′) en dépendance de la valeur de la tension de sortie détectée (Vdc) de l'alimentation en courant continu (1).

**2.** Un dispositif de commande de modulation en largeur d'impulsion pour commander la modulation en largeur d'impulsion d'un circuit inverseur (2) d'un régulateur de vitesse à boucle de commande de courant, pour commander le courant d'entraînement d'un servomoteur (3) de manière ainsi à commander la vitesse du servomoteur (3), le dispositif de commande de modulation en largeur d'impulsion étant caractérisé par :

des moyens de calcul de constantes pour calculer une constante de boucle de courant (K) de manière à être inversement proportionnelle à une tension d'alimentation en courant continu (Vdc) appliquée au circuit inverseur (2) lorsqu'il est en service ; et

des moyens de production de signaux pour former un signal de commande de modulation en largeur d'impulsion en dépendance de ladite constante de boucle de courant (K) et d'une valeur de courant de commande (Ic) de telle manière que le gain de boucle de courant (K′) devienne constant.

**3.** Un régulateur de vitesse selon la revendication 1, présentant un circuit inverseur (2) relié à un servomoteur (3) en tant que système commandé, le régulateur de vitesse comprenant :

des moyens d'ordre pour former un ordre de courant (Ic) et un ordre de vitesse pour le servomoteur (3) ; et

des moyens arithmétiques pour calculer une tension d'ordre de modulation en largeur d'impulsion en dépendance d'un signal différentiel entre un ordre de courant (Ic) provenant des moyens d'ordre et un signal de contre-réaction de courant (If) provenant du servomoteur (3).

**4.** Un procédé de régulation de vitesse dans un régulateur de vitesse relié à un servomoteur (3) en tant que système commandé, le régulateur de vitesse présentant une boucle de commande de courant et comprenant un circuit inverseur (2) commandant le courant d'entraînement du servomoteur (3) de manière ainsi à commander la vitesse du servomoteur (3), le régulateur de vitesse comprenant en outre des moyens d'ordre formant un ordre de courant (Ic) et un ordre de vitesse pour le servomoteur (3), et des moyens arithmétiques calculant une tension d'ordre de modulation en largeur d'impulsion en dépendance d'un signal différentiel entre l'ordre de courant (Ic) provenant des moyens d'ordre et un signal de contre-réaction de courant (If) provenant du servomoteur (3), le procédé de régulation de vitesse étant caractérisé par le fait de :

calculer, à l'aide d'un dispositif de commande de modulation en largeur d'impulsion comprenant des moyens de calcul de constantes, une constante de boucle de courant (K) inversement proportionnelle à une tension d'alimentation en courant continu (Vdc) appliquée au circuit inverseur (2) ;

former, à l'aide de moyens de production de signaux, un signal de commande de modulation en largeur d'impulsion en dépendance de ladite constante de boucle de courant (K) et d'une valeur de commande de courant (Ic) de telle manière que le gain de boucle de courant (K') soit constant ;

effectuer un calcul de la constante de boucle de courant (K) dans le dispositif de commande de modulation en largeur d'impulsion à l'intérieur d'une période d'échantillonnage d'une valeur de courant appliquée en contre-réaction à partir du servomoteur (3) ;

calculer la tension d'ordre de modulation en largeur d'impulsion ; et

déterminer et délivrer le courant du moteur.

Fig. 1

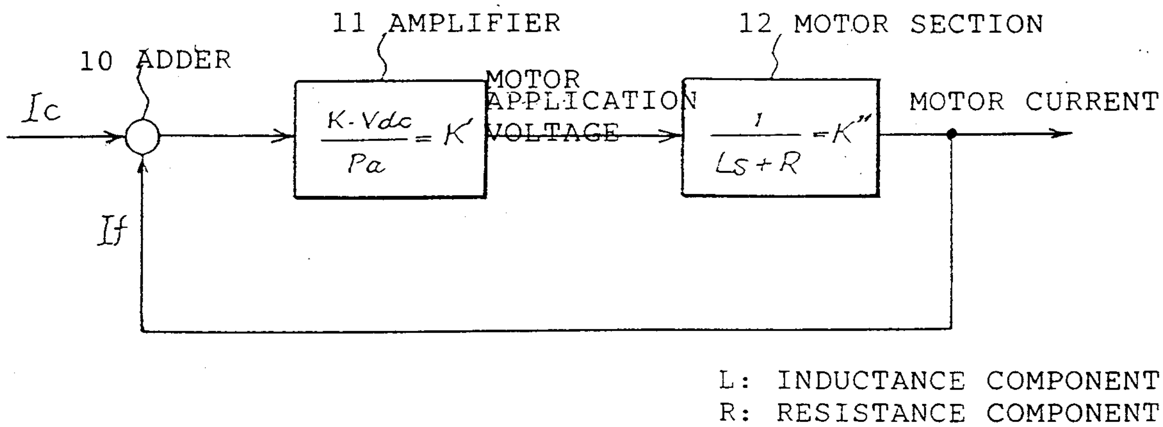
10 ADDER
11 AMPLIFIER
12 MOTOR SECTION
Ic
If
K·Vdc / Pa = K'
MOTOR APPLICATION VOLTAGE
1 / Ls+R = K"
MOTOR CURRENT
L: INDUCTANCE COMPONENT
R: RESISTANCE COMPONENT

Fig. 2

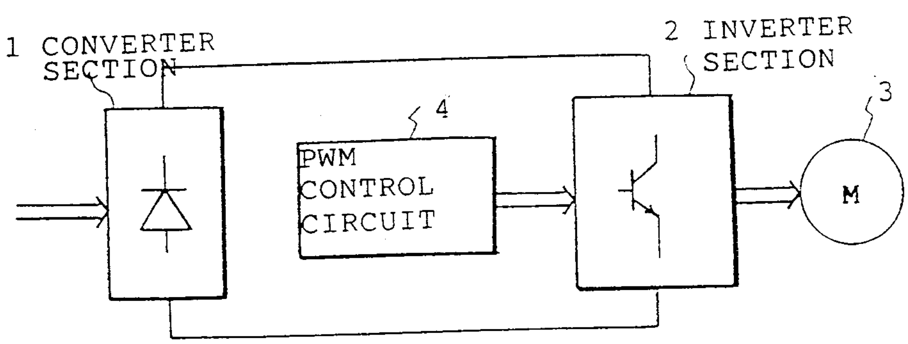
1 CONVERTER SECTION
2 INVERTER SECTION
3
4
PWM CONTROL CIRCUIT
M

Fig. 3

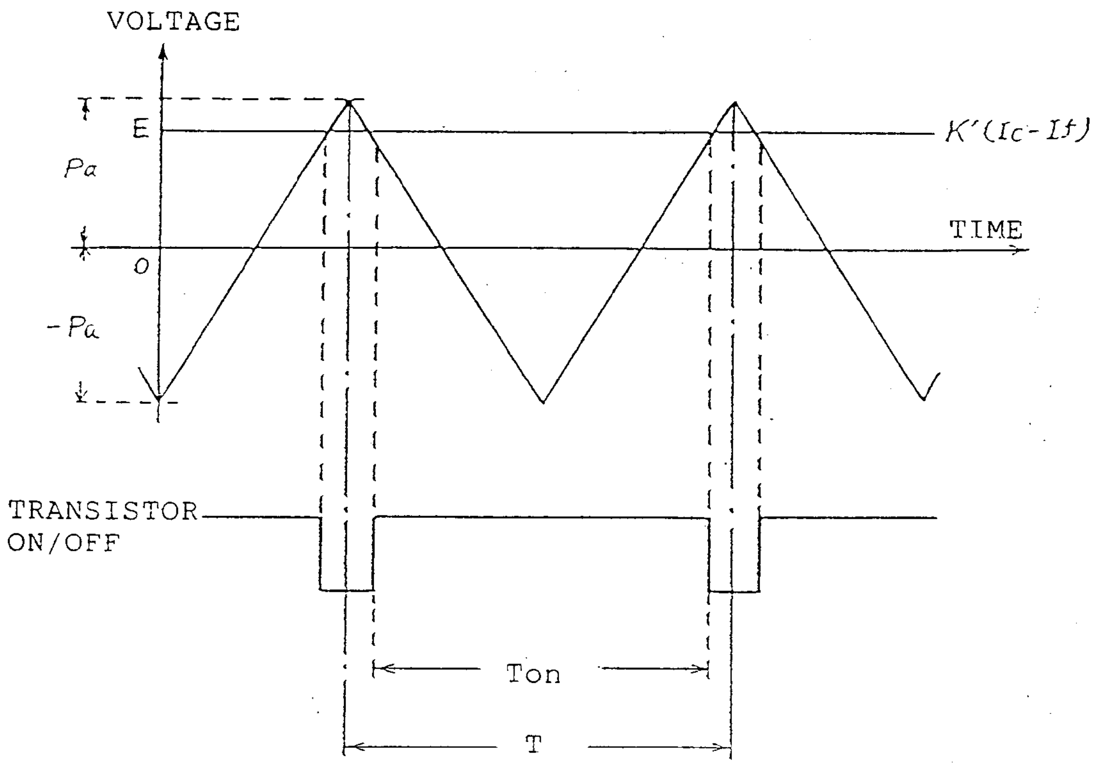
VOLTAGE
E
Pa
0
-Pa
K'(Ic-If)
TIME
TRANSISTOR ON/OFF
Ton
T

Fig. 4

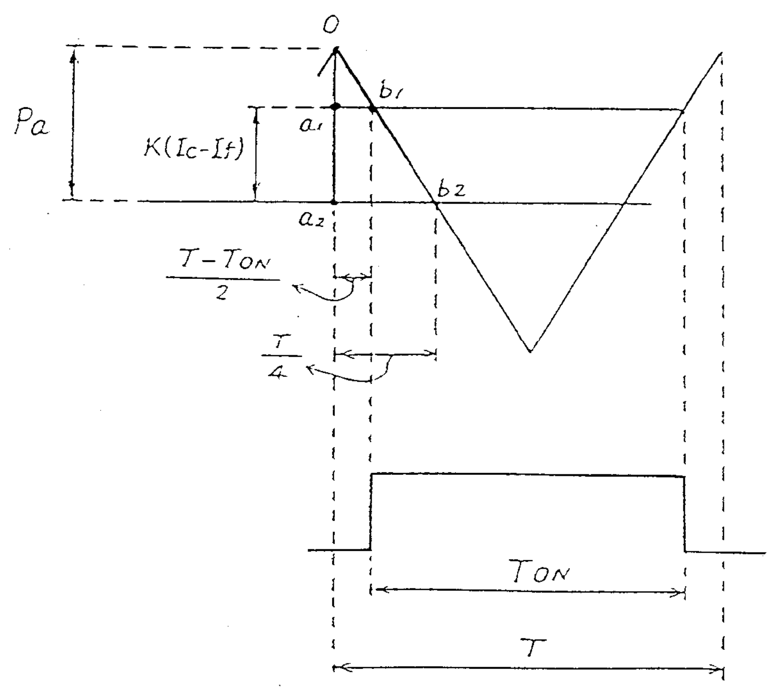
0
Pa
K(Ic-If)
a1
b1
a2
b2
T-TON / 2
T / 4
TON
T

Fig. 5

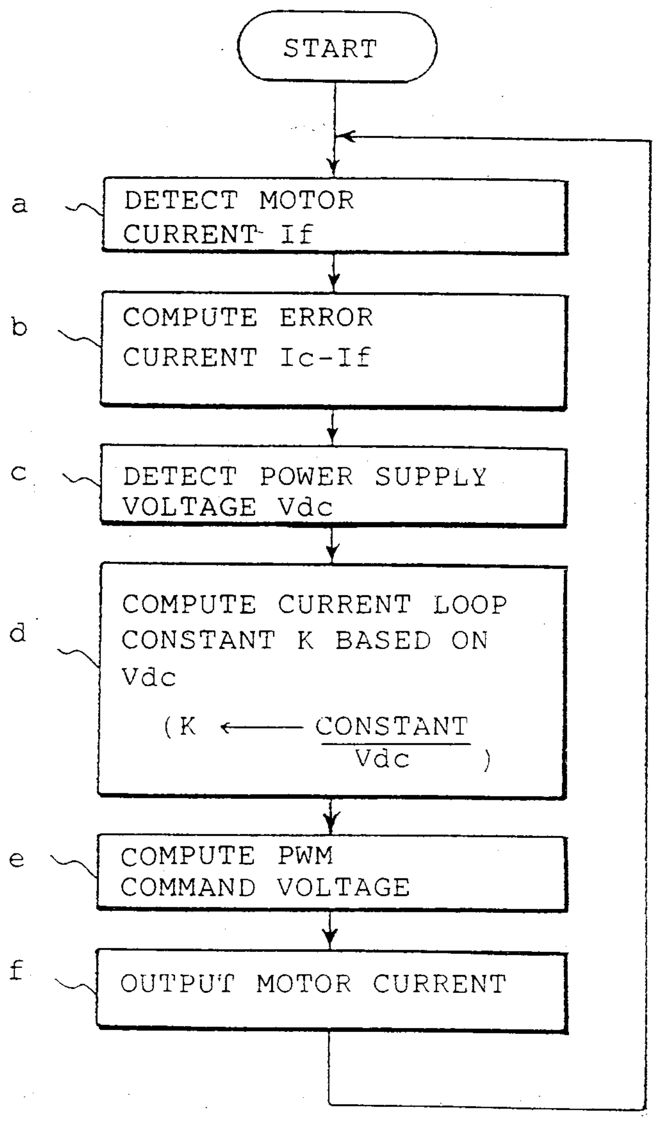
START
a
DETECT MOTOR CURRENT If
b
COMPUTE ERROR CURRENT Ic-If
c
DETECT POWER SUPPLY VOLTAGE Vdc
d
COMPUTE CURRENT LOOP CONSTANT K BASED ON Vdc
(K ← CONSTANT / Vdc)
e
COMPUTE PWM COMMAND VOLTAGE
f
OUTPUT MOTOR CURRENT